# EUROPEAN PATENT APPLICATION

(11) **EP 4 681 986 A1**
(43) Date of publication of application: **21.01.2026**
(21) Application number: 24189868.3
(22) Date of filing: 19.07.2024
(51) Int. Cl.: B60N 2/90, B60N 2/42, B60N 2/427

(54) **SEAT FOR A VEHICLE**

(71) Applicant: Volvo Car Corporation, 405 31 Göteborg (SE)
(72) Inventor: ÖSTH, Jonas, 40531 Göteborg (SE); ADOLFSSON, Peter, 40531 Göteborg (SE); BJÖRKLUND, Magnus, 40531 Göteborg (SE); BOHMAN, Katarina, 40531 Göteborg (SE); HEURLIN, Fredrik, 40531 Göteborg (SE); ROSENBERG, Johan, 40531 Göteborg (SE); SETTERBERG, Peter, 40531 Göteborg (SE)
(74) Representative: Maiwald GmbH

(57) **Abstract**

Seat (10) for a vehicle (1), the seat (10) comprising a seating portion (11) for supporting a lower body (3) of an occupant (2) of the seat (10), and a leg rest (12) for supporting the legs (4) of the occupant (2). The leg rest (12) is attached to the seating portion (11), wherein the seat (10) comprises at least one force absorbing element (20) configured for at least partially absorbing a force (F) exerted by the legs (4) of the occupant (2) on the leg rest (12) in the event of a collision (CE) of the vehicle (1).

## Description

### TECHNICAL FIELD

The present disclosure relates to a seat for a vehicle, and to a vehicle.

### BACKGROUND

In vehicles, specifically in autonomous vehicles, relaxed riding postures may be offered to its occupants. For this purpose, a seat may include a leg rest for supporting the legs.

With current vehicle seats, there may be a risk of injury in the case of a collision of the vehicle. For example, in the event of a rear-end impact, the occupant may be moving into the seat, and the leg rest may subject the occupant to high femur and pelvis loads due to the inertia of the lower extremities. Specifically, loading of the femora and legs can lead either to femur fracture, or for vulnerable occupants, to pelvis fractures in the form of acetabulum fractures.

### SUMMARY

The problem is at least partially solved or alleviated by the subject matter of the independent claims of the present disclosure, wherein further examples are incorporated in the dependent claims.

According to a first aspect, there is provided a seat for a vehicle, the seat comprising a seating portion for supporting a lower body of an occupant of the seat, and a leg rest for supporting the legs of the occupant, the leg rest being attached to (or, in other words, arranged to) the seating portion, wherein the seat comprises at least one force absorbing element configured for at least partially absorbing a force exerted by the legs of the occupant on the leg rest in the event of a collision of the vehicle.

Accordingly, the invention solves the above-mentioned risk of injury in the case of collision by using at least one force absorbing element within the seat, wherein the at least one force absorbing element at least partially absorbs a force exerted by the legs of the occupant on the leg rest in the event of a collision. The invention thereby helps to reduce SE:AFE occupant leg and pelvis loads in collisions including rear-end impact and for rearward facing occupants in frontal impacts. Further, ramping out of the seat may be an issue that is typically prevented by the seat belt, but further occupant support as provided by the seat of the invention may help in this regard. Specifically, the controlled support of the legs provided by the invention also reduces the risk of ramping out of the seat, which may specifically be an issue in rear-end collisions.

Hence, the leg rest does not only increase the comfort in any vehicle, including autonomous vehicles, but also increases occupant safety.

Generally, the vehicle may be of any type, including but not limited to cars, trucks, busses and similar. Further, generally, the seat may be configured to accommodate a single occupant or multiple occupants such as two or three occupants. For example, the seat may be a front seat for a single occupant, e.g., driver seat or co-pilot seat, for a car.

The seating portion may generally be the portion of the seat or, in other words, seat device, which is intended or configured for the occupant or, in other words, passenger of the vehicle to sit on. This means that the seating portion may comprise a seating surface, on which the occupant may be seated. The seating surface may be provided or formed by a cushioning of the seat. The cushioning may be arranged on or attached to a frame of the seat. Additionally, the seat may comprise a back rest, which may include a back cushioning and/or surface, specifically a back surface against which the occupant may rest with their back. The lower body of the occupant at least includes the buttocks or, in other words, posterior, and potentially the thighs of the occupant. In particular, the seating portion may be configured for supporting the posterior and/or thighs of the occupant.

The force absorbing element may alternatively be referred to as an energy absorbing element, which may be configured for at least partially absorbing an energy exerted by the legs or resulting from a force exerted by the legs of the occupant on the leg rest in the event of a collision or, in other words, crash of the vehicle. In particular, the at least one force absorbing element may be configured for at least partially absorbing energy from a force of the leg rest directed towards the seating portion or, in other words, directed in a direction extending from the leg rest towards the seating portion. The force absorbing function provided by the at least one force absorbing element can be used independent of the orientation of the seat within the vehicle. The force absorbing function is that the force exerted on the leg rest will be directed towards the seating portion and at least partially absorbed by the at least one force absorbing element. For example, if the seat is installed in the vehicle such that it faces forward or a front-end of the vehicle (in the forward direction of the vehicle), the force absorbing function will be triggered in case of a rear-end impact or collision of the vehicle. Alternatively, if the seat is installed in the vehicle such that it faces rearward or towards the rear-end of the vehicle (in the rearward direction of the vehicle), the force absorbing function will be triggered in case of a front-end impact or collision of the vehicle. Hence, vehicles with rearward facing seats, specifically in autonomous vehicles, may also benefit from the invention for frontal impact scenarios.

In an example, the leg rest may be attached to the seating portion by the at least one force absorbing element. This does not exclude other elements which may be used to attach the seating portion in addition to the at least one force absorbing element. Such other elements may for example be mechanical links, such as guides, beams, rails, rotary axes, and similar. Further, such other elements may be comprising the at least one force absorbing element or be attached thereto.

In an example, the at least one force absorbing element may be part of or attached to a first attachment segment at the seating portion, the first attachment segment being attached to a second attachment segment at the leg rest. One or both of the first attachment segment and the second attachment segment may be comprising one or more elements as described above. The attachment segments may be configured as frames, beams or similar and made from any material such as but not limited to metal.

In an example, the second attachment segment may comprise a rotary axis for rotating the leg rest relative to the seating portion by the occupant, wherein the rotary axis is lockable in one or more rotational positions of the leg rest relative to the seating portion. By means of the rotary axis, the leg rest may be rotated by the occupant relative to the seating portion to ensure a comfortable seating position. Advantageously, the rotary axis is lockable by the occupant. For this purpose, the second attachment segment may comprise one or more locking elements for locking the rotary axis in one or more rotational positions. In particular, the rotary axis and the one or more locking elements may be configured such that the rotary axis may be locked continuously, at any rotational position within the rotation of the rotary axis, or at discrete rotary positions.

In an example, the rotary axis may be lockable such that it will not unlock in the event of a collision of the vehicle. In particular, the rotary axis may be lockable with a locking force, specifically of one or more locking elements, which is high enough to prevent unlocking of the rotary axis and consequent rotational movement in the collision event. Accordingly, the rotary axis will remain in the locked rotational position in the case of the collision of the vehicle. This prevents that the leg rest collapses and that at least part of the force exerted by the legs of the occupant thereby cannot be absorbed anymore, and that the legs hit a front side of the seat that may be located behind the leg rest.

In an example, one of the attachment segments may be configured moveable relative to or within the other one of the attachment segments when the at least one force absorbing element at least partially absorbs force. The movability of the attachment segments relative to one another or within one another may be controlled by the at least one force absorbing element. Specifically, when one of the attachment segments such as the first attachment segment comprises, or has the at least one force absorbing element attached thereto, the movement may be controlled by the absorption of the force by the at least one force absorbing element. Specifically, by at least partially absorbing the force, the total movement due to the force exerted by the legs may be limited or reduced compared to a case where there would be no force absorption. Further, by enabling that the attachment segments are moved relative to one another, the attachment of the leg rest to the seat portion and generally the seat is not damaged or at least less likely to be damaged except for the at least one force absorbing element in case it uses plastic deformation to absorb forces, for example.

In an example, at least one of the attachment segments may be in the form of a beam. The beam form of the attachment segments may ensure a stable attachment of the leg rest to the seating portion. Also, it may allow that the force exerted by the legs is well forwarded to the at least one force absorbing element for at least partially absorbing it. For example, one of the attachment segments may be a U-shaped beam and the other one of the attachment segments may be a C-shaped beam. In particular, the first attachment segment may be the U-shaped beam and the second attachment segment may be the C-shaped beam. Specifically, the C-shaped beam may be arranged moveably, in particular slidingly, within the U-shaped beam.

In an example, the seat may comprise at least two force absorbing elements arranged on opposite lateral sides of the seat. Further, the seat may comprise two first attachment segments and two second attachment segments being arranged on the opposite lateral sides of the seat. Thereby, the force may be at least partially absorbed in a substantially uniform manner by the at least two force absorbing elements.

In an example, the at least one force absorbing element may be mechanically deformable for at least partially absorbing force. In particular, the mechanical deformation may be a plastic deformation. In other words, the at least one force absorbing element may be configured to at least partially absorb force by plastic deformation thereof. For example, the at least one force absorbing element may comprise metal or be made from metal, which may be deformed to absorb force. However, alternative materials may be additionally or alternatively used. Also, the at least one force absorbing element may have a geometry enabling or support the force absorption.

In an example, the at least one force absorbing element may be a sheet metal element, which may be in particular plastically deformable by shearing and/or buckling. For the plastic deformation by shearing and/or buckling, the at least one force absorbing element may be designed with a specific material thickness and/or shape along the path of the force exerted by the legs and forwarded to the at least one force absorbing element.

In an example, alternatively, or additionally, the at least one force absorbing element may be a damping element for at least partially absorbing force. Hence, instead of mechanical, in particular plastic deformation, or in addition to this, the force may be reversibly dampened. The damping element may for example be a damper such as a hydraulic damper, one or more mechanical springs, a combination thereof, and similar.

In an example, the at least one force absorbing element may be configured such that the leg rest is moved towards the seating portion in the event of a collision of the vehicle. Specifically, the leg rest may be moved towards the seating portion due to the at least partial force absorption. For example, in case of plastic deformation or damping, the at least one force absorbing element may be subjected to a compression and be shortened in extension, whereby the leg rest is moved closer to the seat portion.

In an example, the at least one force absorbing element may be configured such that a maximum movement distance of the leg rest towards the seating portion is within the range of 3 to 20 cm, in particular in the range of 5 to 15 cm. The range of the maximum movement distance may at least be defined by the design of the at least one force absorbing element, in particular the force absorption characteristics provided thereby. The range as specified herein has been found advantageous for occupants because it allows for sufficient force absorption in the event of a collision of the vehicle to prevent the herein specified injuries of the occupant.

In an example, the at least one force absorbing element may be configured for at least partially absorbing force if the force is in the range of 1 kN to 4 kN, in particular in the range of 1,5 kN to 4 kN (kilo Newton). This range has been found to be suitable for most occupants, which may otherwise depend on their body measurements, including their weight and size, specifically their lower body and leg mass to prevent the herein specified injuries in the event of a collision of the vehicle, specifically in a rearward or frontal collision. Specifically, by means of the lower value in the range, it may be ensured that at least one force absorbing element does not absorb forces which are lower than 1 kN or 1,5 kN, which may be associated with other events than collisions such as strong braking or acceleration of the vehicle or accidental pushing of the leg rest. Further, the range may ensure that the force absorption function will be triggered for most or all occupants independent of their body measurements. Moreover, the higher value in the range may ensure that the force absorbing element does not need to be overdimensioned in terms of its force absorbing properties, which may unnecessarily add costs, weight, packaging space and so on to the seat.

According to a second aspect, there is provided a vehicle comprising at least one seat of the first aspect.

In particular, the vehicle may comprise two or more seats of the first aspect. Further, the one or more seats may be oriented towards the rear or front of the vehicle or in any other direction in between these.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a side view on a first collision scenario involving two vehicles;
- Figure 2: shows a side view on a second collision scenario involving two vehicles;
- Figure 3: shows a side view on a seat as used in one of the two vehicles of Figs. 1 and 2; and
- Figure 4: shows a perspective view of a frame of the seat of Fig. 3 with a schematic illustration of an attachment structure attaching a leg rest of the seat to a seat portion of the seat.

### DETAILED DESCRIPTION

The Figures are merely schematic representations and serve only to illustrate examples of the disclosure. Identical or equivalent elements are in principle provided with the same reference signs.

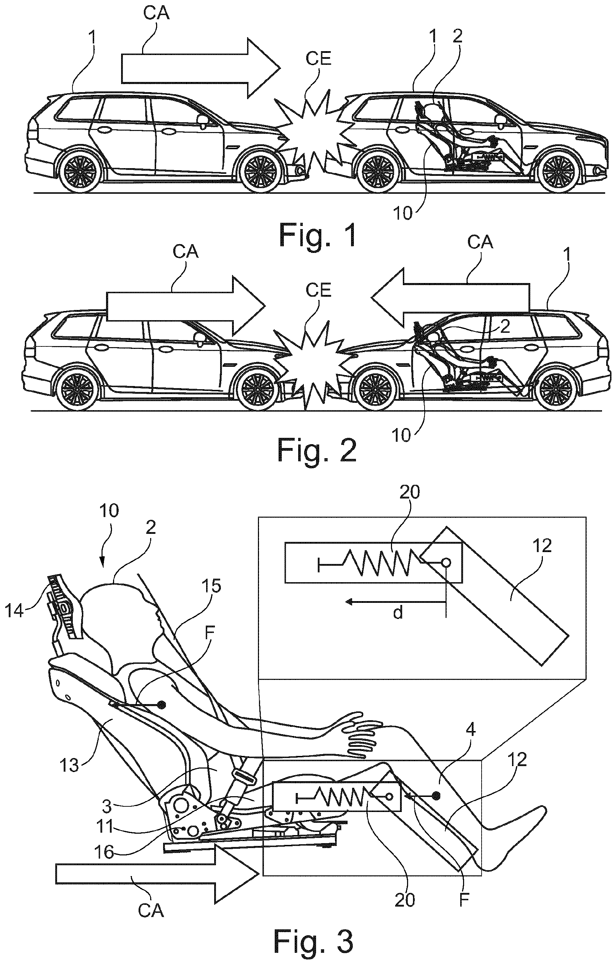

Fig. 1 shows a side view on a first collision scenario involving two vehicles 1. The right vehicle 1 in Fig. 1 is shown to be involved in a rearward collision event CE, in which the left vehicle 1 in Fig. 1 hits the rear-end of the right vehicle 1. Due to this, an occupant 2 or, in other words, passenger seated on a seat 10 inside the cabin of the right vehicle 1 is subjected to a collision acceleration CA in the direction from left to right in Fig. 1. In this example, the seat 10 is facing the front-end of the right vehicle 1 in which it is installed. Hence, the occupant 2 is seated on the seat 10 such that they look in the direction towards the front of the right vehicle 1.

Fig. 2 shows a side view on a second collision scenario involving two vehicles 1. The right vehicle 1 in Fig. 1 is shown to be involved in a frontal collision event CE, in which the left vehicle 1 in Fig. 1 hits the front-end of the right vehicle 1. Due to this, a passenger 2 seated on a seat 1 inside the cabin of the right vehicle 1 is also subjected to a collision acceleration CA in the direction from left to right in Fig. 1 as well as a collision acceleration CA in the opposed direction. In this example, the seat 10 is facing the rear-end of the right vehicle 1 in which it is installed. Hence, the occupant 2 is seated on the seat 10 such that they look in the direction towards the rear of the right vehicle 1. Accordingly, different from Fig. 1, the occupant 2 is not facing the forward driving direction of the right vehicle 1 in the example of Fig. 2.

Fig. 3 shows a side view on the seat 10 as used in right vehicle 1 of Figs. 1 and 2. The right vehicle 1 may in particular but not only be an autonomous vehicle, in which a relaxed riding posture may be offered to the occupants 2 of the vehicle 1. For example, as shown in Fig. 2, the occupant 2 may not need to be driving the vehicle 1 by themselves and is thus facing the rear-end of the right vehicle 1 rather than the front-end to observe the road. To increase the comfort during this relaxed riding posture, the seat 10 may include a leg rest 12 for supporting the legs 4 of the occupant.

While bringing comfort, through the leg rest 12, there may be a risk of injury in any one of the collision events CE of the right vehicle 1 of Figs. 1 and 2. For example, in the event of a rear-end impact, the occupant 2 may be moving into the seat 10, and the leg rest 12 may subject the occupant 2 to high femur and pelvis loads due to the inertia of the lower extremities, in particular the legs 4. The acting force F is schematically indicated in Fig. 3 by an arrow at the legs 4 and approximately at the location of the shoulder of the occupant 2. Specifically, loading of the femora and legs 4 of the occupant 2 can lead either to femur fracture, or, for vulnerable occupants 2, to pelvis fractures in the form of acetabulum fractures.

To prevent this, the seat 10 or, in other words, seat device as used in the vehicle 1 comprises one, two or more force absorbing elements 20 configured to at least partially absorb the force F, which is exerted by the legs 4 of the occupant 2 onto the leg rest 12 in any one of the collision events CE of the vehicle 1. As shown in Fig. 3, the force F may be directed in a direction opposite to the direction of the collision acceleration CA, which the vehicle 1 may experience. In other words, the force F may be directed in a direction from the leg rest 12 towards the seat 10 or towards a seating portion 11 of the seat 10. This may force or, in other words, press the occupant 2 into the seat 10, in particular when a seat belt 15 is being used by the occupant 2 to keep them affixed to the seat 10 during the collision event CE.

As shown in Fig. 3, the leg rest 12 may be attached to a seating portion 11 of the seat 10, on which the occupant 2 may be seated with their lower body 3, in particular posterior or buttocks. The seating portion 11 may comprise a seat cushioning. Generally, the seating portion 11 may be provided on a seat frame 16 of the seat 10 as schematically illustrated in Fig. 3 by leaving out the cover of the seat 10 underneath the seating portion 11. Further, the seat 10 may comprise a back rest 13 and/or a head rest 14.

In the example of Fig. 3, the leg rest 12 is attached to the seating portion 11 using the one or more force absorbing elements 20. A detail is illustrated in Fig. 3 as an enlarged view on the leg rest 12 and one force absorbing element 20. Here, the force absorbing element 20 is exemplary illustrated as a dampening element, in particular as a mechanical spring. However, the force absorbing element 20 can alternatively or additionally be or comprise other types of force absorbing elements 20 such as, for example, a mechanically deformable element, such as a sheet metal. Further, the enlarged view illustrates a movement distance d indicating that the leg rest 12 is moved towards the seating portion 11 when the force absorbing element 20 absorbs the force F.

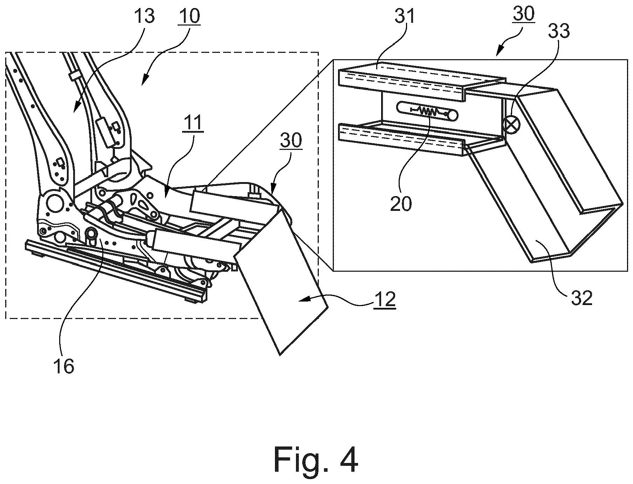

Fig. 4 shows a perspective view of the frame 16 of the seat 10 without the cushioning of the seat portion 11 and the back rest 13. The frame 16 comprises an attachment structure 30 as schematically illustrated in Fig. 4, in particular in an enlarged view of a detail of Fig. 4 showing one part or half of the attachment structure 30.

In this example, the part of the attachment structure 30 shown in the enlarged view within Fig. 4 comprises a first attachment segment 31, which may be formed as a U-shaped beam, for example. The first attachment segment 31 may be attached to or be located at or underneath the seating portion 11, for example. Further, the attachment structure 30 comprises a second attachment segment 31, which may be formed as a C-shaped beam and arranged moveable within the first attachment segment 31, for example. In particular, the first attachment structure 31 may comprise the force absorbing element 20. When the force absorbing element 20 absorbs the force F in the collision event CE as shown in Fig. 1 or 2, the leg rest 12 is moved by the movement distance d shown in Fig. 3 towards the seating portion 11 by having the second attachment segment 32 moving or sliding within the first attachment segment 31.

Further, as schematically illustrated in Fig. 4, the attachment structure 30 or generally the seat 10 may comprise a rotary axis 33 for rotating the leg rest 12 relative to the seating portion 11. The rotary axis 33 may be lockable in a rotational position with a locking force such that the rotary axis 33 will not unlock in any one of the collision events CE of Fig. 1 and 2.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: vehicle
- 2: occupant
- 3: lower body
- 4: legs
- 10: seat
- 11: seating portion
- 12: leg rest
- 13: back rest
- 14: head rest
- 15: seat belt
- 16: frame
- 20: force absorbing element
- 30: attachment structure
- 31: first attachment segment
- 32: second attachment segment
- 33: rotary axis
- CA: collision acceleration
- CE: collision event
- d: movement distance
- F: force

## Claims

1. A seat (10) for a vehicle (1), the seat (10) comprising a seating portion (12) for supporting a lower body (3) of an occupant (2) of the seat (10), and a leg rest (12) for supporting the legs (4) of the occupant (2), the leg rest (12) being attached to the seating portion (11), wherein the seat (10) comprises at least one force absorbing element (20) configured for at least partially absorbing a force (F) exerted by the legs (4) of the occupant (2) on the leg rest (12) in the event of a collision (CE) of the vehicle (1).

2. The seat (10) of claim 1, wherein the leg rest (12) is attached to the seating portion (11) by the at least one force absorbing element (20).

3. The seat (10) of claim 2, wherein the at least one force absorbing element (20) is part of or attached to a first attachment segment (31) at the seating portion (11), the first attachment segment (31) being attached to a second attachment segment (32) at the leg rest (12).

4. The seat (10) of claim 3, wherein the second attachment segment (32) comprises a rotary axis (33) for rotating the leg rest (12) relative to the seating portion (11) by the occupant (2), wherein the rotary axis (33) is lockable in one or more rotational positions of the leg rest (12) relative to the seating portion (11).

5. The seat (10) of claim 4, wherein the rotary axis (33) is lockable such that it will not unlock in the event of a collision (CE) of the vehicle (1).

6. The seat (10) of any one of claims 3 to 5, wherein one of the attachment segments (31, 32) is configured moveable relative to or within the other one of the attachment segments (31, 32) when the at least one force absorbing element (20) at least partially absorbs force (F).

7. The seat (10) of any one of claims 3 to 6, wherein at least one of the attachment segments (31, 32) is in the form of a beam.

8. The seat (10) of any one of the previous claims, wherein the seat (10) comprises at least two force absorbing elements (20) arranged on opposite lateral sides of the seat (10).

9. The seat (10) of any one of the previous claims, wherein the at least one force absorbing element (20) is mechanically deformable for at least partially absorbing force (F).

10. The seat (10) of claim 9, wherein the at least one force absorbing element (20) is a sheet metal element plastically deformable by shearing and/or buckling.

11. The seat (10) of any one of the previous claims, wherein the at least one force absorbing element (20) is a damping element for at least partially absorbing force (F).

12. The seat (10) of any one of the previous claims, wherein the at least one force absorbing element (20) is configured such that the leg rest (12) is moved towards the seating portion (11) in the event of a collision (CE) of the vehicle (1).

13. The seat (10) of claim 12, wherein the at least one force absorbing element (20) is configured such that a maximum movement distance (d) of the leg rest (12) towards the seating portion (11) is within the range of 3 to 20 cm, in particular in the range of 5 to 15 cm.

14. The seat (10) of any one of the previous claims, wherein the at least one force absorbing element (20) is configured for at least partially absorbing force (F) if the force (F) is in the range of 1 kN to 4 kN.

15. A vehicle (1) comprising at least one seat (10) of any one of the previous claims.
